# FASCICULE DE BREVET EUROPEEN

(11) **EP 3 526 563 B1**
(45) Date de publication et mention de la délivrance du brevet: **16.09.2020**
(21) Numéro de dépôt: 17791961.0
(22) Date de dépôt: 11.10.2017
(51) Int. Cl.: G01J 5/04, G01J 5/06, G01J 5/02, G01J 5/34, G01J 5/08

(54) **BOITIER AVEC UN CAPTEUR PYROELECTRIQUE**
GEHÄUSE MIT EINEM PYROELEKTRISCHEN SENSOR
CASING WITH A PYROELECTRIC SENSOR

(30) Priorité: 14.10.2016 FR 1659967
(43) Date de publication de la demande: 21.08.2019
(73) Titulaire: Delta Dore, 35270 Bonnemain (FR)
(72) Inventeur: EVEN, Nicolas, 35270 Bonnemain (FR); LEGROS, Guillaume, 35270 Bonnemain (FR); POUJAUD, Laurent, 35270 Bonnemain (FR)
(74) Mandataire: Cabinet Le Guen Maillet
(86) Numéro de dépôt international: PCT/EP2017/075880
(87) Numéro de publication internationale: WO 2018/069364

(56) Documents cités:
- US-A- 3 513 312
- US-A- 4 998 826
- US-A1- 2006 024 046
- US-A1- 2013 119 253

## Description

La présente invention concerne un boîtier avec un capteur pyroélectrique logé dans ledit boîtier.

Dans le domaine de la détection d'individus, il est connu d'utiliser un capteur pyroélectrique. Ce capteur est installé dans un boîtier fixé au voisinage du passage à surveiller et il est sensible aux rayons infrarouges qu'il reçoit.

L'utilisation d'un tel capteur s'accompagne généralement de la mise en place d'une lentille de Fresnel qui est relativement coûteuse à réaliser et qui peut engendrer un mauvais fonctionnement du capteur pyroélectrique.

Le document US-A-3,513,312 divulgue un boîtier avec un capteur pyroélectrique.

Un objet de la présente invention est de proposer un boîtier avec un capteur pyroélectrique qui peut s'affranchir de la mise en place d'une lentille de Fresnel tout en conservant une bonne détection.

A cet effet, est proposé un boîtier comportant :
- une cuve,
- un capteur pyroélectrique fixé au fond de la cuve et présentant un axe de visée et un cône de visée autour de l'axe de visée,
- un couvercle fermant la cuve et percé d'une fente centrée sur l'axe de visée,

Le boîtier étant caractérisé en ce que la fente présente une forme allongée constituée d'une partie centrale et de deux parties d'extrémité prolongeant la partie centrale de part et d'autre de celle-ci, où la partie centrale présente une largeur réduite et où chaque partie d'extrémité présente une largeur supérieure à la largeur réduite et où la largeur supérieure augmente en partant de la partie centrale jusqu'à l'extrémité de la partie d'extrémité, et où la partie centrale présente une grande longueur, tandis que chaque partie d'extrémité présente une longueur inférieure à la grande longueur.

Avantageusement, à partir de la largeur réduite de la partie centrale, la largeur de chaque partie d'extrémité augmente de manière progressive.

Avantageusement, l'augmentation est réalisée par un arc de cercle.

Avantageusement, l'augmentation est réalisée par un plan incliné.

Avantageusement, l'ouverture angulaire de la fente vue depuis le capteur pyroélectrique autour de l'axe de visée est légèrement inférieure à celle du capteur pyroélectrique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté en coupe d'un boîtier selon l'invention,
la Fig. 2 est une vue de dessus du boîtier de la Fig. 1 selon un premier mode de réalisation, et
la Fig. 3 est une vue de dessus du boîtier de la Fig. 1 selon un deuxième mode de réalisation.

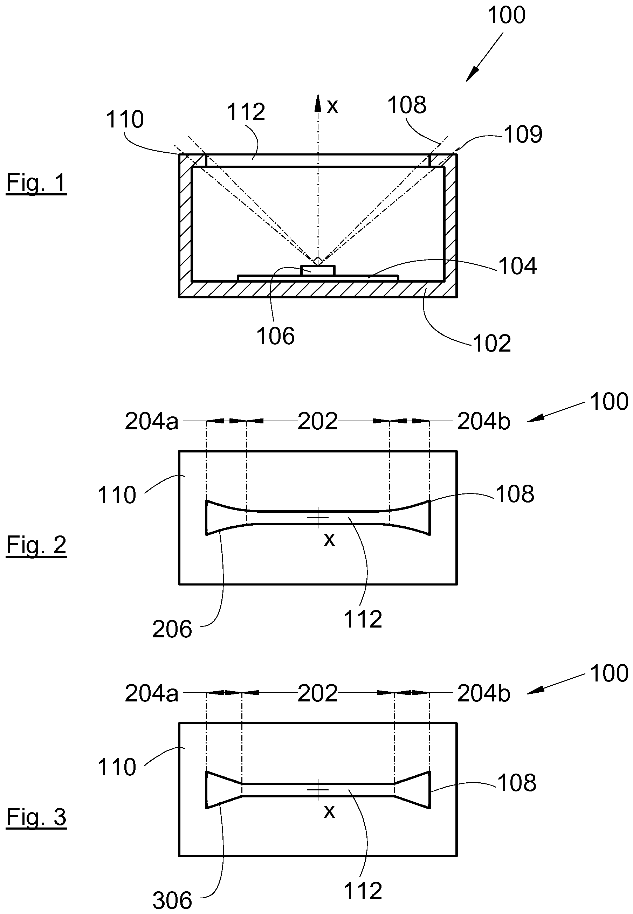

La Fig. 1 montre un boîtier 100 qui comprend une cuve 102 au fond de laquelle est fixé un circuit imprimé 104 qui porte un capteur pyroélectrique 106 dont l'axe de visée X est orienté à l'opposé du circuit imprimé 104. Le capteur pyroélectrique 106 présente un cône de visée 109 qui est réparti autour de l'axe de visée X et qui présente un angle d'ouverture de 100°.

Le boîtier 100 comprend également un couvercle 110 qui ferme la cuve 102 et qui est percé d'une fente 112 centrée sur l'axe de visée X et à travers laquelle passe une partie du cône de visée 109. Dans le plan du couvercle 110, c'est-à-dire perpendiculairement à l'axe de visée X, la fente 112 est symétrique par rapport au point d'intersection de l'axe de visée X et du plan du couvercle 110.

Comme le montrent les Figs. 2 et 3, la fente 112 présente une forme allongée qui est constituée d'une partie centrale 202 et de deux parties d'extrémité 204a-b qui prolongent la partie centrale 202 de part et d'autre de celle-ci. Dans le plan du couvercle 110, c'est-à-dire perpendiculairement à l'axe de visée X, la partie centrale 202 présente une largeur réduite, tandis que chaque partie d'extrémité 204a-b présente une largeur supérieure à la largeur réduite et où la largeur supérieure augmente en partant de la partie centrale 202 jusqu'à l'extrémité de la partie d'extrémité 204a-b, et la partie centrale 202 présente une grande longueur, tandis que chaque partie d'extrémité 204a-b présente une longueur inférieure à la grande longueur.

La largeur réduite permet une détection par le capteur pyroélectrique dans un champ de vision relativement réduit ce qui évite les fausses détections en dehors de ce champ de vision.

La largeur plus importante aux extrémités permet au capteur pyroélectrique 106 de recevoir un éclairement plus important ce qui compense la plus faible sensibilité du capteur pyroélectrique aux limites du cône de visée 109.

A partir de la largeur réduite de la partie centrale 202, la largeur de chaque partie d'extrémité 204a-b augmente de manière progressive.

L'ouverture angulaire de la fente 112 vue depuis le capteur pyroélectrique 106 est de 90° environ autour de l'axe de visée X et est représentée par la référence 108. L'ouverture de la fente 112 qui est légèrement inférieure à celle du capteur pyroélectrique 106 évite l'éblouissement du capteur pyroélectrique 106 par des flux lumineux issus de sources hors de son cône de visée 109.

Dans le mode de réalisation de la Fig. 2, l'augmentation est réalisée par un arc de cercle 206.

Dans le mode de réalisation de la Fig. 3, l'augmentation est réalisée par un plan incliné 306.

Selon un mode de réalisation particulier, la fente 112 présente une longueur de 40 mm, la largeur de la partie centrale 202 est de 1 mm, la largeur maximale de chaque partie d'extrémité 204a-b est de 3,88 mm.

Pour protéger les éléments contenus dans le boîtier 100, la fente 112 est fermée par une vitre transparente dans la bande de longueur d'onde du capteur pyroélectrique 106.

## Revendications

1. Boîtier (100) comportant :
- une cuve (102),
- un capteur pyroélectrique (106) fixé au fond de la cuve (102) et présentant un axe de visée (X) et un cône de visée (109) autour de l'axe de visée (X),
- un couvercle (110) fermant la cuve (102) et percé d'une fente (112) centrée sur l'axe de visée (X),
le boîtier (100) étant **caractérisé en ce que** la fente (112) présente une forme allongée constituée d'une partie centrale (202) et de deux parties d'extrémité (204a-b) prolongeant la partie centrale (202) de part et d'autre de celle-ci, où la partie centrale (202) présente une largeur réduite et où chaque partie d'extrémité (204a-b) présente une largeur supérieure à la largeur réduite et où la largeur supérieure augmente en partant de la partie centrale (202) jusqu'à l'extrémité de la partie d'extrémité (204a-b), et où la partie centrale (202) présente une grande longueur, tandis que chaque partie d'extrémité (204a-b) présente une longueur inférieure à la grande longueur.

2. Boîtier (100) selon la revendication 1, **caractérisé en ce qu'**à partir de la largeur réduite de la partie centrale (202), la largeur de chaque partie d'extrémité (204a-b) augmente de manière progressive.

3. Boîtier (100) selon la revendication 2, **caractérisé en ce que** l'augmentation est réalisée par un arc de cercle (206).

4. Boîtier (100) selon la revendication 2, **caractérisé en ce que** l'augmentation est réalisée par un plan incliné (306).

5. Boîtier (100) selon l'une des revendications 1 à 4, **caractérisé en ce que** l'ouverture angulaire de la fente (112) vue depuis le capteur pyroélectrique (106) autour de l'axe de visée (X) est légèrement inférieure à celle du capteur pyroélectrique (106).

## Patentansprüche

1. Gehäuse (100), aufweisend:
- ein Fach (102),
- einen pyroelektrischen Sensor (106), der am Boden des Fachs (102) befestigt ist und einen Sichtachse (X) sowie einen Sichtkegel (109) um die Sichtachse (X) aufweist,
- einen Deckel (110), der das Fach (102) verschließt und mit einem auf die Sichtachse (X) zentrierten Schlitz (112) versehen ist,
**dadurch gekennzeichnet, dass** der Schlitz (112) eine längliche Form aufweist, die aus einem mittleren Teil (202) und aus zwei Endteilen (204a-b) besteht, die den mittleren Teil (202) beiderseits davon verlängern, wo der mittlere Teil (202) eine reduzierte Breite aufweist und wo jeder Endteil (204a-b) eine Breite aufweist, die größer als die reduzierte Breite ist, und wo die größere Breite ausgehend von dem mittleren Teil (202) bis zu dem Ende des Endteils (204a-b) zunimmt und wo der mittlere Teil (202) eine große Länge aufweist, während jeder Endteil (204ab) eine Länge aufweist, die kleiner als die große Länge ist.

2. Gehäuse (100) nach Anspruch 1, **dadurch gekennzeichnet, dass** die Breite jedes Endteils (204a-b) ausgehend von der reduzierten Breite des mittleren Teils (202) fortschreitend zunimmt.

3. Gehäuse (100) nach Anspruch 2, **dadurch gekennzeichnet, dass** die Zunahme durch einen Kreisbogen (206) realisiert ist.

4. Gehäuse (100) nach Anspruch 2, **dadurch gekennzeichnet, dass** die Zunahme durch eine schiefe Ebene (306) realisiert ist.

5. Gehäuse (100) nach einem der Ansprüche 1 bis 4, **dadurch gekennzeichnet, dass** die winkelförmige Öffnung des Schlitzes (112), von dem pyroelektrischen Sensor (106) um die Sichtachse (X) aus gesehen, etwas kleiner als die des pyroelektrischen Sensors (106) ist.

## Claims

1. Casing (100) comprising:
- a container (102),
- a pyroelectric sensor (106) attached at the bottom of the container (102) and having a viewing axis (X) and a viewing cone (109) around the viewing axis (X),
- a lid (110) closing the container (102) and pierced with a slit (112) centred on the viewing axis (X),
the casing (100) being **characterized in that** the slit (112) has an elongated shape made of a central portion (202) and of two end portions (204a-b) prolonging the central portion (202) on each side of this one, wherein the central portion (202) has a reduced width and wherein each end portion (204a-b) has a width greater than the reduced width and wherein the great width increases from the central portion (202) up to the end of the end portion (204a-b), and wherein the central portion (202) has a great length, whereas each end portion (204a-b) has a length smaller than the great length.

2. Casing (100) according to Claim 1, **characterized in that** from the reduced width of the central portion (202), the width of each end portion (204-b) increases in a progressive way.

3. Casing (100) according to Claim 2, **characterized in that** the increasing is realized through an arc of a circle (206).

4. Casing (100) according to Claim 2, **characterized in that** the increasing is realized through an inclined plane (306).

5. Casing (100) according to any of the Claims 1 to 4, **characterized in that** the angular aperture of the slit (112) viewed from the pyroelectric sensor (106) around the viewing axis (X) is slightly lower than the angular aperture of the pyroelectric sensor (106).
